Europäisches Patentamt

European Patent Office

Office européen des brevets

(19)

(11) **EP 0 881 478 B1**

(12) **FASCICULE DE BREVET EUROPEEN**

(45) Date de publication et mention
de la délivrance du brevet:
**12.03.2003   Bulletin 2003/11**

(51) Int Cl.$^7$: **G01M 15/00**

(21) Numéro de dépôt: **98400950.6**

(22) Date de dépôt: **16.04.1998**

(54) **Procédé et dispositif de détermination de la pression moyenne indiquée dans un moteur à combustion interne**

Methode und Gerät zur Bestimmung des indizierten Durchschnittsdruckes einer Brennkraftmaschine

Method and device for the determination of the indicated mean effective pressure of an internal combustion engine

(84) Etats contractants désignés:
**AT DE GB**

(30) Priorité: **29.05.1997   FR 9706730**

(43) Date de publication de la demande:
**02.12.1998   Bulletin 1998/49**

(73) Titulaire: **INSTITUT FRANCAIS DU PETROLE**
**92852 Rueil-Malmaison Cedex (FR)**

(72) Inventeur: **Porot, Pierre**
**75010 Paris (FR)**

(56) Documents cités:
**EP-A- 0 647 774          EP-A- 0 742 359**
**US-A- 4 111 041**

**Description**

La présente invention concerne le domaine des mesures associées à un moteur, afin d'évaluer ses performances.

Il s'agit plus précisément d'essayer d'évaluer l'un des paramètres caractéristiques du fonctionnement d'un moteur à savoir la pression moyenne indiquée (PMI), en différents points de fonctionnement. Ce paramètre est en effet bien représentatif des conditions instantanées de fonctionnement du moteur puisqu'il donne une indication directe du travail utile des gaz au cours d'un cycle de combustion. La PMI permet ainsi des comparaisons entre des moteurs différents.

On peut définir la PMI comme la pression constante qui, appliquée au piston durant toute sa course de détente, fournirait le même travail pour un cycle. Autrement dit, il s'agit de la mesure du travail thermodynamique fourni aux pistons lors d'un cycle-moteur, rapporté à la cylindrée. La définition mathématique est :

$$PMI = \frac{1}{V_{cyl}} \int P_{cyl} \qquad dV = \frac{1}{V_{cyl}} \int P_{cyl} \frac{dV}{d\theta} \, d\theta$$

avec

$V_{cyl}$ = cylindrée = volume balayé par le piston entre le point mort haut et le point mort bas
$P_{cyl}$ = pression instantanée dans un cylindre
$dV$ = différentielle du volume de la chambre
$d\theta$ = différentielle de l'angle vilebrequin

Cette formule concerne un cylindre. La PMI du moteur est obtenue en faisant la moyenne des PMI obtenues pour chacun des cylindres du moteur.

De façon connue, la pression dans un cylindre est mesurée par un capteur ; la dérivée du volume peut être calculée à partir de formules cinématiques donnant le déplacement du piston en fonction de l'angle vilebrequin.

De nombreuses méthodes sont fondées sur ce principe. A titre illustratif la demande de brevet EP 0742359-A2 décrit un mode de contrôle du fonctionnement d'un moteur dans lequel la PMI est calculée. Selon cet art antérieur, la PMI est déterminée grâce à une mesure de pression associée à une mesure d'angle vilebrequin à un instant spécifique donné.

De même, le brevet français FR 711 185 divulgue un système de contrôle de moteurs basé sur ce type de mesures.

Il s'agit donc, selon cet art antérieur, de mesurer l'angle vilebrequin θ au même instant que la pression P dans un cylindre. Les codeurs angulaires connus sont assez précis pour déterminer des angles à partir d'un zéro donné, prédéterminé; La difficulté réside dans la détermination du zéro qui s'avère en pratique très délicate. Le problème est donc de déterminer avec précision et fiabilité le passage du piston à un point donné, par exemple le point mort haut. Actuellement les méthodes et les instrumentations associées permettent d'atteindre une précision de plus ou moins 0,25°V (degré vilebrequin).

En fait, la détermination de la PMI rencontre essentiellement les problèmes suivants :

- la précision du capteur de pression
- la précision de la mesure d'angle vilebrequin
- l'utilisation d'une formule cinématique et non d'une mesure de la dérivée du volume
- le calcul de l'intégrale par des méthodes numériques approchées.

Ces imprécisions ne sont pas directement gênantes dans la plupart des cas. Cependant elles peuvent poser problème lorsque l'on cherche à déterminer la pression moyenne due aux frottements PMF. Par définition PMF = PMI - PME.

La PMF représente le travail thermodynamique du piston qui n'est pas récupéré sur l'arbre moteur. C'est le travail perdu par frottements essentiellement.

La PME est la pression moyenne effective et représente le travail reçu à l'arbre rapporté à la cylindrée. On la calcule généralement à l'aide de la mesure de couple.

Ainsi la pression moyenne due aux frottements (PMF) peut prendre de faibles valeurs. Elle est systématiquement entachée des erreurs sur la PMI et sur la PME.

Il est donc intéressant d'améliorer la précision sur la PMI lorsque l'on calcule la PMF.

Par ailleurs les méthodes connues de calcul de la PMI partent de l'hypothèse selon laquelle la vitesse de rotation du vilebrequin est constante quel que soit le régime-moteur. En fait ceci n'est pas exact, la vitesse instantanée du piston varie, n'est pas constante surtout aux faibles charges. Cette approximation selon l'art antérieur induit donc une source d'imprécision.

La présente invention a essentiellement pour objectif d'améliorer la précision sur la PMI.

Ces objectifs sont atteints pour la présente invention qui a pour objet un procédé de détermination de la pression moyenne indiquée (PMI) d'un moteur à combustion interne. Ce procédé consiste, pour chaque cylindre du moteur, à

- déterminer la vitesse instantanée d'un piston associé audit cylindre du moteur;
- mesurer la pression instantanée dans ledit cylindre;
- calculer l'intégrale dans le temps du produit de la pression instantanée par la vitesse instantanée;
- diviser ladite intégrale par la course du piston Lp dans ledit cylindre

afin d'obtenir la PMI dans un cylindre donné, puis éventuellement faire la moyenne des PMI ainsi obtenues dans chacun des cylindres du moteur, pour obtenir ladite PMI du moteur.

Selon l'invention, l'étape de détermination de la vitesse instantanée est obtenue en mesurant l'accélération et en intégrant ledit signal d'accélération.

Avantageusement, on utilise un calculateur qui détermine ou reçoit ladite vitesse instantanée, reçoit ladite pression instantanée et traite lesdites valeurs pour donner, en sortie, ladite PMI.

Selon un aspect de l'invention, l'on synchronise les mesures de pression et de vitesse ou d'accélération sur chaque cylindre.

Il est aussi possible de synchroniser les mesures sur l'ensemble des cylindres du moteur.

L'invention vise en outre un dispositif de détermination de la pression moyenne indiquée (PMI) d'un moteur à combustion interne comprenant au moins une chambre de combustion délimitée par un cylindre, un piston et une culasse, au moins un moyen destiné à mesurer la pression instantanée dans ladite chambre de combustion.

Selon l'invention, le dispositif comprend

- au moins un moyen destiné à déterminer la vitesse instantanée d'un piston dans ladite chambre de combustion;
- un moyen de calcul de l'intégrale dans le temps du produit de ladite pression par ladite vitesse instantanée;
- un moyen de calcul de la PMI dans ledit cylindre, obtenu en divisant l'intégrale par la course du piston;
- un moyen de calcul de la PMI de l'ensemble des cylindres du moteur.

De façon particulière, le moyen de détermination de la vitesse instantanée comprend un moyen de mesure de l'accélération instantanée associé à un moyen d'intégration dans le temps de ladite accélération.

Conformément à un mode de réalisation de l'invention, le dispositif comprend en outre un moyen de synchronisation des mesures de pression et de vitesse ou d'accélération dans ladite chambre de combustion d'un cylindre.

Selon un autre mode de réalisation de l'invention, le dispositif peut comprendre en outre un moyen de synchronisation des mesures sur l'ensemble des cylindres du moteur.

L'invention sera mieux comprise, d'autres détails, caractéristiques et particularités apparaîtront à la lecture de la description qui va suivre, faite à titre illustratif et nullement limitatif, en référence aux dessins annexés sur lesquels :

- la figure 1 est un schéma de principe montrant un moteur équipé selon l'invention;
- la figure 2 est un organigramme illustrant l'organisation du calcul de la PMI selon l'invention;
- la figure 3 concerne les courbes obtenues à partir des mesures synchronisées d'accélération du piston et de la pression dans la chambre de combustion.

Il est connu de calculer la PMI à partir de la formule cinématique de la dérivée du volume $PMI = \frac{1}{V_{cyl}} \int P_{cyl} \frac{dV}{d\theta} d\theta$, comme énoncé en tête de la description.

La présente invention propose une démarche différente afin d'éliminer les sources d'erreur habituelles.

En effet, par définition :

$$PMI = \frac{1}{V_{cyl}} \int P_{cyl}\, S_{cyl}\, dx_p$$

$$= \frac{1}{V_{cyl}} \int P_{cyl}\, S_{cyl}\, \frac{dx_p}{dt} dt$$

$$= \frac{1}{Lp} \int P_{cyl}\, Vp\, dt$$

avec

$S_{cyl}$ = section du cylindre

$Lp = \dfrac{V_{cyl}}{S_{cyl}}$ = course du piston

$x_p$ = position instantanée du piston

$\dfrac{dx_p}{dt} = Vp$ = vitesse instantanée du piston

En mesurant la vitesse instantanée (c'est-à-dire à des instants différents du cycle moteur) du piston simultanément à la pression dans le cylindre, il n'est plus nécessaire d'avoir une mesure de l'angle vilebrequin. Ceci évite donc les problèmes liés au calage angulaire évoqués ci-avant.

Il est donc nécessaire, selon l'invention, de synchroniser les mesures de vitesse et de pression grâce à un système d'acquisition approprié.

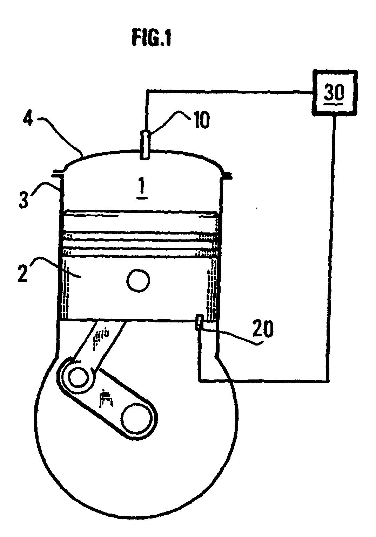

La figure 1 montre schématiquement une coupe longitudinale d'un moteur susceptible de mettre en oeuvre l'invention. Celui-ci comprend une chambre de combustion 1 délimitée par un piston 2, un cylindre 3 et la culasse 4. Un capteur de pression 10 est disposé par exemple au niveau de la culasse 4 afin de donner la pression instantanée régnant dans la chambre de combustion 1.

Par ailleurs, un capteur de vitesse 20 peut être placé sur le piston lui-même afin de délivrer des valeurs de vitesses à différents instants du cycle moteur. Un accéléromètre peut être utilisé sans sortir du cadre de l'invention; un intégrateur est alors utilisé pour déterminer la vitesse instantanée correspondante. Un filtrage haute fréquence peut être nécessaire afin d'éliminer les données "parasites" de la vitesse du piston.

Les valeurs de pression et de vitesse instantanées sont délivrées à un système 30 d'acquisition et de traitement qui va effectuer le calcul de la PMI dans un cylindre puis sur l'ensemble des cylindres du moteur.

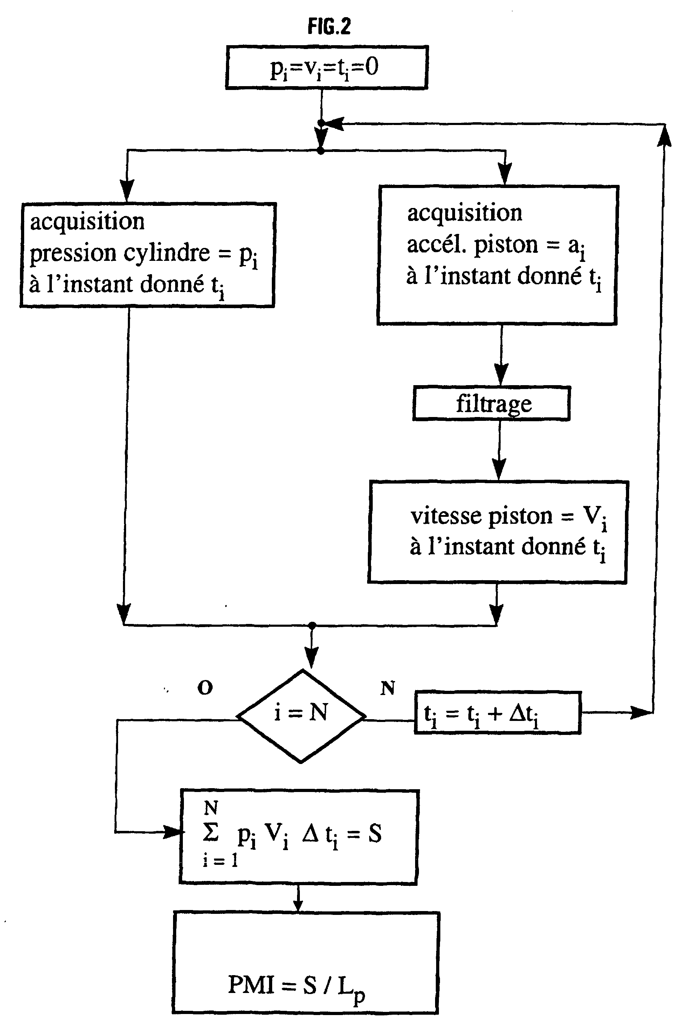

La figure 2 montre les principales étapes du traitement. Il s'agit d'abord d'acquérir la pression ($p_i$) à un instant donné ($t_i$) du cycle et simultanément la vitesse ($V_i$) ou l'accélération ($a_i$) du piston. Si l'on dispose d'un accéléromètre, un intégrateur numérique ou électronique, est alors nécessaire pour atteindre la vitesse correspondante. Le système d'acquisition 30 mémorise donc ($p_i$), ($V_i$) et calcule le produit ($p_{ix}$, $V_{ix}$, $t_i$) pour un instant $t_i$, puis si le cycle moteur n'est pas achevé $t_i$ est incrémenté d'un pas ($\Delta t_i$) et une nouvelle acquisition de $p_i$ et $V_i$ est opérée... suivie du calcul du nouveau produit ($p_i \times v_i \times \Delta t_i$) pour l'instant ($t_i + \Delta t_i$). Une sommation est faite sur l'ensemble des produits ($p_i \times v_i \times t_i$).

On obtient ainsi une valeur $S = \Sigma\, p_i\, v_i\, \Delta t_i$ sur un cycle-moteur.

La PMI peut être obtenue en divisant S par Lp course du piston, en mémoire dans le système 30.

On obtient ainsi la PMI dans un cylindre pour un cycle donné. On peut ensuite faire la moyenne des PMI obtenues pour avoir la PMI cycle à cycle du cylindre.

Il est aussi possible de faire la moyenne des PMI de chaque cylindre pour obtenir une PMI "moteur", caractéristique du fonctionnement du moteur.

Ce qui vient d'être énoncé est une méthode permettant de calculer l'intégrale $\int P.V\, dt$.

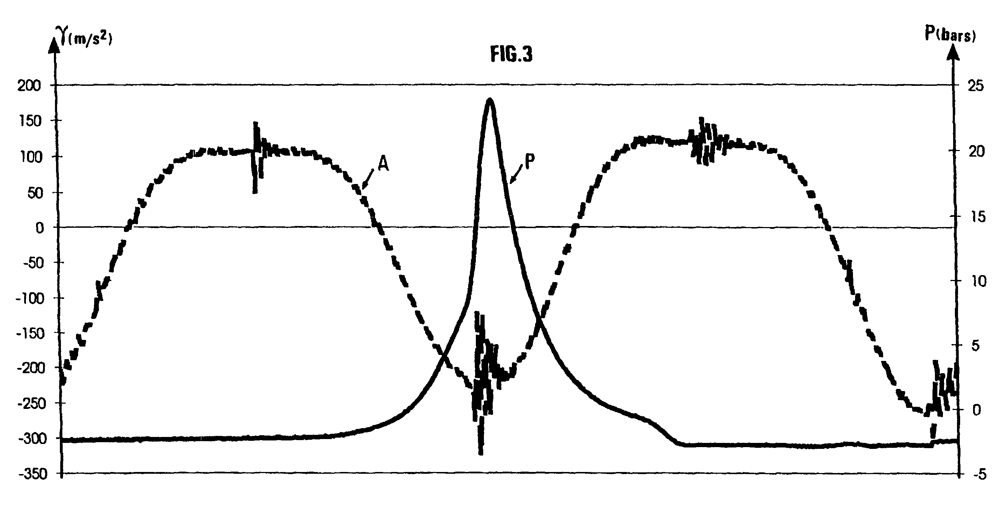

La figure 3 concerne des courbes obtenues selon l'invention. La courbe A en pointillés donne l'accélération ($\gamma$) du piston à différents instants d'un cycle-moteur.

L'accélération est ici exprimée en m/s$^2$.

La pression relative est représentée sur la courbe P, et varie ici de -2,5 bars à 22 bars.

Ces deux mesures sont acquises simultanément à des instants t, comme expliqué en relation avec la figure 2.

Vis-à-vis des méthodes connues, la présente invention permet donc d'éviter les imprécisions sur la mesure de l'angle vilebrequin. Elle permet en outre de ne pas utiliser une formule cinématique et donc d'éliminer plusieurs sources d'erreur.

Les acquisitions nécessaires à l'invention, à savoir la pression instantanée et la vitesse ou l'accélération instantanée correspondante sont relativement aisées, sources de peu d'erreur.

Le traitement en lui-même est tout aussi facile. Il peut être effectué en temps réel, pendant le fonctionnement du moteur. Ceci permet alors de connaître en permanence la PMI du moteur.

Le traitement selon l'invention peut aussi être effectué après la phase d'acquisition.

## Revendications

1. Procédé de détermination de la pression moyenne indiquée (PMI) d'un moteur à combustion interne consistant, pour chaque cylindre du moteur, à :

   - déterminer la vitesse instantanée d'un piston associé audit cylindre du moteur;
   - mesurer la pression instantanée dans ledit cylindre;
   - calculer l'intégrale dans le temps du produit de la pression instantanée par la vitesse instantanée;
   - diviser ladite intégrale par la course du piston dans ledit cylindre afin d'obtenir la PMI dans un cylindre donné.

2. Procédé selon la revendication 1, **caractérisé en ce qu'**il consiste en outre à faire la moyenne des PMI obtenues dans chacun des cylindres du moteur, pour obtenir ladite PMI du moteur.

3. Procédé selon l'une quelconque des revendications 1 ou 2, **caractérisé en ce que** l'étape de détermination de la vitesse instantanée est obtenue en mesurant l'accélération et en intégrant ledit signal d'accélération.

4. Procédé selon l'une quelconque des revendications précédentes, **caractérisé en ce qu'**on utilise un calculateur qui détermine ou reçoit ladite vitesse instantanée, reçoit ladite pression instantanée et traite lesdites valeurs pour donner, en sortie, ladite PMI.

5. Procédé selon l'une quelconque des revendications précédentes, **caractérisé en ce que** l'on synchronise les mesures de pression et de vitesse ou d'accélération sur chaque cylindre.

6. Procédé selon la revendication 5, **caractérisé en ce que** l'on synchronise les mesures sur l'ensemble des cylindres du moteur.

7. Dispositif de détermination de la pression moyenne indiquée (PMI) d'un moteur à combustion interne comprenant au moins une chambre de combustion (I) délimitée par un cylindre (3), un piston (2) et une culasse (4), au moins un moyen (10) destiné à mesurer la pression instantanée dans ladite chambre de combustion (1), comprenant en outre

   - au moins un moyen (20) destiné à déterminer la vitesse instantanée d'un piston dans ladite chambre de combustion (1);
   - un moyen (30) de calcul de l'intégrale dans le temps du produit de ladite pression par ladite vitesse instantanée;

- un moyen (30) de calcul de la PMI dans ledit cylindre, obtenu en divisant l'intégrale par la course du piston;
- un moyen de calcul de la PMI sur au moins un des cylindres du moteur.

**8.** Dispositif selon la revendication 7, **caractérisé en ce que** ledit moyen (30) de calcul permet de calculer la PMI sur l'ensemble des cylindres du moteur.

**9.** Dispositif selon l'une quelconque des revendications 7 ou 8, **caractérisé en ce que** le moyen (20) de détermination de la vitesse instantanée comprend un moyen de mesure de l'accélération instantanée associé à un moyen d'intégration dans le temps de ladite accélération.

**10.** Dispositif selon l'une quelconque des revendications 7 à 9, **caractérisé en ce qu'**il comprend en outre un moyen de synchronisation des mesures de pression et de vitesse ou d'accélération dans ladite chambre (1) de combustion d'un cylindre.

**11.** Dispositif selon l'une quelconque des revendication 7 à 10, **caractérisé en ce qu'**il comprend en outre un moyen de synchronisation des mesures sur l'ensemble des cylindres du moteur.

## Claims

**1.** Method for determining the indicated mean pressure (PMI) of an internal combustion engine consisting, for each cylinder of the engine, in:

- determining the instantaneous velocity of a piston associated with said cylinder of the engine,
- measuring the instantaneous pressure in said cylinder,
- calculating the integral in time of the product of the instantaneous pressure and the instantaneous velocity,
- dividing said integral by the stroke of the piston in said cylinder,

in order to obtain the indicated mean pressure (PMI) in a given cylinder.

**2.** Method according to claim 1, **characterised in that** it additionally consists in averaging the indicated mean pressures (PMI) obtained in each of the cylinders of the engine to obtain said indicated mean pressure (PMI) of the engine.

**3.** Method according to any one of claims 1 or 2, **characterised in that** the step of determining the instantaneous velocity is obtained by measuring the acceleration and by integrating said acceleration signal.

nal.

**4.** Method according to any one of the preceding claims, **characterised in that** a computer is used which determines or receives said instantaneous velocity, receives said instantaneous pressure and processes said values to give said indicated mean pressure (PMI) at the output.

**5.** Method according to any one of the preceding claims, **characterised in that** the measurements of pressure and velocity or acceleration for each cylinder are synchronised.

**6.** Method according to claim 5, **characterised in that** the measurements for all the cylinders of the engine are synchronised.

**7.** Device for determining the indicated mean pressure (PMI) of an internal combustion engine comprising at least one combustion chamber (1) delimited by a cylinder (3), a piston (2) and a cylinder head (4), at least one means (10) designed to measure the instantaneous pressure in said combustion chamber (1), comprising in addition

- at least one means (20) designed to determine the instantaneous velocity of a piston in said combustion chamber (1),
- a means (30) for calculating the integral in time of the product of said pressure and said instantaneous velocity,
- a means (30) for calculating the indicated mean pressure (PMI) in said cylinder, obtained by dividing the integral by the stroke of the piston,
- a means for calculating the indicated mean pressure (PMI) for at least one of the cylinders of the engine.

**8.** Device according to claim 7, **characterised in that** said calculating means (30) allows calculation of the indicated mean pressure (PMI) for all the cylinders of the engine.

**9.** Device according to any one of claims 7 or 8, **characterised in that** the means (20) for determining the instantaneous velocity comprises a means for measuring the instantaneous acceleration associated with a means for integrating said acceleration in time.

**10.** Device according to any one of claims 7 to 9, **characterised in that** it additionally comprises a means for synchronising the measurements of pressure and velocity or acceleration in said combustion chamber (1) of a cylinder.

**11.** Device according to any one of claims 7 to 10, **char-**

**acterised in that** it additionally comprises a means for synchronising the measurements for all the cylinders of the engine.

**Patentansprüche**

1. Verfahren zur Bestimmung des mittleren angezeigten Drucks (PMI) eines Verbrennungsmotors, das für jeden Zylinder des Motors darin besteht:

   - die augenblickliche Geschwindigkeit eines dem Zylinder des Motors zugeordneten Kolbens zu bestimmen;
   - den augenblicklichen Druck in dem Zylinder zu messen;
   - das Integral über die Zeit von dem Produkt des augenblicklichen Drucks mal der augenblicklichen Geschwindigkeit zu berechnen;
   - dieses Integral durch den Hub des Kolbens in dem Zylinder zu teilen,

   um den PMI in einem vorgegebenen Zylinder zu erhalten.

2. Verfahren nach Anspruch 1, **dadurch gekennzeichnet, dass** es außerdem darin besteht, das Mittel der in jedem der Zylinder des Motors erhaltenen PMI zu bilden, um den PMI des Motors zu erhalten.

3. Verfahren nach einem der Ansprüche 1 oder 2, **dadurch gekennzeichnet, dass** die Stufe zur Bestimmung der augenblicklichen Geschwindigkeit unter Messen der Beschleunigung und unter Integrieren dieses Beschleunigungssignals erhalten wird.

4. Verfahren nach einem der vorhergehenden Ansprüche, **dadurch gekennzeichnet, dass** man einen Rechner verwendet, der die augenblickliche Geschwindigkeit bestimmt oder empfängt, den augenblicklichen Druck empfängt und diese Werte bearbeitet, um am Ausgang den PMI anzugeben.

5. Verfahren nach einem der vorhergehenden Ansprüche, **dadurch gekennzeichnet, dass** man die Messungen von Druck und von Geschwindigkeit oder von Beschleunigung auf jedem Zylinder synchronisiert.

6. Verfahren nach Anspruch 5, **dadurch gekennzeichnet, dass** man die Messungen auf der Gesamtheit der Zylinder des Motors synchronisiert.

7. Vorrichtung zur Bestimmung des mittleren angezeigten Drucks (PMI) eines Verbrennungsmotors, umfassend wenigstens eine durch einen Zylinder (3) begrenzte Brennkammer (1), einen Kolben (2) und einen Zylinderkopf (4), wenigstens ein Mittel (10), das darauf ausgerichtet ist, den augenblicklichen Druck in der Brennkammer (1) zu messen, welche Vorrichtung außerdem umfasst:

   - wenigstens ein Mittel (20), das darauf ausgerichtet ist, die augenblickliche Geschwindigkeit eines Kolbens in der Brennkammer (1) zu bestimmen;
   - ein Mittel (30) zur Berechnung des Integrals über die Zeit des Produkts des Drucks mal der augenblicklichen Geschwindigkeit;
   - ein Mittel (30) zur Berechnung des PMI in dem Zylinder, der unter Division des Integrals durch den Hub des Kolbens erhalten wird;
   - ein Mittel zur Berechnung des PMI auf wenigstens einem der Zylinder des Motors.

8. Vorrichtung nach Anspruch 7, **dadurch gekennzeichnet, dass** das Mittel (30) zur Berechnung es ermöglicht, den PMI auf der Gesamtheit der Zylinder des Motors zu berechnen.

9. Vorrichtung nach einem der Ansprüche 7 oder 8, **dadurch gekennzeichnet, dass** das Mittel (20) zur Bestimmung der augenblicklichen Geschwindigkeit ein Mittel zur Messung der augenblicklichen Beschleunigung umfasst, das einem Mittel zur Integration von der Beschleunigung über die Zeit zugeordnet ist.

10. Vorrichtung nach einem der Ansprüche 7 bis 9, **dadurch gekennzeichnet, dass** sie außerdem ein Mittel zur Synchronisierung der Messungen von Druck und von Geschwindigkeit oder von Beschleunigung in der Brennkammer (1) eines Zylinders umfasst.

11. Vorrichtung nach einem der Ansprüche 7 bis 10, **dadurch gekennzeichnet, dass** sie außerdem ein Mittel zur Synchronisierung der Messungen auf der Gesamtheit der Zylinder des Motors umfasst.

**FIG.1**

**FIG.2**

$$p_i = v_i = t_i = 0$$

acquisition
pression cylindre = $p_i$
à l'instant donné $t_i$

acquisition
accél. piston = $a_i$
à l'instant donné $t_i$

filtrage

vitesse piston = $V_i$
à l'instant donné $t_i$

O    $i = N$    N    $t_i = t_i + \Delta t_i$

$$\sum_{i=1}^{N} p_i \, V_i \, \Delta t_i = S$$

$$PMI = S / L_p$$

FIG.3